## Europäisches Patentamt
## European Patent Office
## Office européen des brevets

(19)

(11) Veröffentlichungsnummer: **0 025 504
B1**

(12)

# EUROPÄISCHE PATENTSCHRIFT

(45) Veröffentlichungstag der Patentschrift:
25.05.83

(51) Int. Cl.³: **B 29 H 17/00**

(21) Anmeldenummer: **80104585.7**

(22) Anmeldetag: **02.08.80**

(54) **Vorrichtung zum Spritzen von Laufgummiringen.**

(30) Priorität: **15.09.79 DE 2937402**

(43) Veröffentlichungstag der Anmeldung:
**25.03.81 Patentblatt 81/12**

(45) Bekanntmachung des Hinweises auf die Patenterteilung:
**25.05.83 Patentblatt 83/21**

(84) Benannte Vertragsstaaten:
**BE CH FR GB IT LI NL SE**

(56) Entgegenhaltungen:
**EP-A-0 005 423
DE-A-1 579 242
DE-A-2 645 178
US-A-4 028 169**

(73) Patentinhaber: **Fried. Krupp Gesellschaft mit beschränkter Haftung, Altendorfer Strasse 103, D-4300 Essen 1 (DE)**

(72) Erfinder: **Reiner, Friedrich, Dr., Seestücken 25 h, D-2100 Hamburg 90 (DE)**
Erfinder: **Saul, Hans-Peter, Baron-Voght-Strasse 15, D-2000 Hamburg 52 (DE)**
Erfinder: **Krebs, Gerd, Goldammerweg 1, D-2100 Hamburg 90 (DE)**

BUNDESDRUCKEREI BERLIN

## Vorrichtung zum Spritzen von Laufgummiringen

Die Erfindung betrifft eine Vorrichtung zum Spritzen von endlosen Laufgummiringen auf Gürteleinlagen gemäß dem ersten Teil des Anspruchs 1.

Eine derartige Vorrichtung ist durch die DE-A-1 579 242 bekannt.

Vorrichtungen zum Gießen oder Spritzen eines Gummiluftreifens ohne Karkasse sind beispielsweise aus der AT-B-339 757 bekannt, wonach der Kern mit einem Oberteil und einem Unterteil relativ zu mindestens zwei Segmentreihen axial beweglich angeordnet ist, wobei die Segmentreihen radial bewegbare Segmente aufweisen. In der AT-B-339 756 wird vorgeschlagen, Außenschalen mit zwei Segmentgruppen zu verwenden, deren Segmente auf Achsen schwenkbar gelagert sind und die jeweils an einer Seite des herzustellenden Reifenrohlings liegen und womit nacheinander verschiedene Reifenbereiche gegossen bzw. gespritzt werden. Zur Herstellung von Fahrzeugreifen mit Karkasse sind diese Vorrichtungen jedoch ungeeignet. Hierzu müssen nach den bisher bekannten Verfahren zwei Arbeitsschritte, das Wickeln des Gürtels auf einer Wickeltrommel und das Spritzen der Lauffläche, getrennt durchgeführt werden, wobei zwischen den beiden Arbeitsgängen an einer Wickeltrommel und einer davon getrennt angeordneten Laufstreifenspritzanlage zur Herstellung endlicher Laufstreifen, die noch mit einer Fehlerquote behaftet sind, noch Transportarbeiten sowie evtl. Zwischenlagerungen anfallen.

So wird z. B. in der DE-A1-2 645 178 eine Vorrichtung zur Herstellung von Reifenkarkaßrohlingen vorgeschlagen, auf die nach Streckung des Trommelteils der Gürtel auf das vorgesehene Maß gebracht und der nach Fertigstellung der in einer davon getrennten Laufstreifenspritzanlage hergestellte und zugeschnittene Laufstreifen aufgelegt werden kann (DE-A1-2 645 178, Seite 10, vorletzter Absatz).

In der DE-A-1 579 242 wird ein Verfahren zur Herstellung von Luftreifen beschrieben, bei dem der Laufstreifen in einer aus einem Kern und einer Außenform bestehende Form eingespritzt wird, der feste Kern dann durch einen aufweitbaren Kern mit einer darauf aufgebrachten Karkasse ausgewechselt wird und die Karkasse durch Aufweiten des Kerns gegen den Laufstreifen bombiert wird. Auch nach dem in der DE-A-1 579 242 beschriebenen Verfahren müssen die Karkasse und der Laufstreifen vor dem Bombieren in zwei verschiedenen Vorrichtungen unter hohem Aufwand fertiggestellt werden.

Schließlich beschreibt die erst nach dem Prioritätstag der vorliegenden Anmeldung veröffentlichte EP-A1-5 423 ein Verfahren zum Gießen oder Spritzen von Fahrzeugreifen, bei dem in einem Kern in getrennten Arbeitsgängen mindestens zwei verschiedene Bereiche des Reifens unter Umhüllung einer Verstärkungseinlage gegossen oder gespritzt werden, wobei ein bereits mit einer Vorrichtung der in der AT-PS 339 757 beschriebenen Art gegossener oder gespritzter Kern der betreffenden Vorrichtung entnommen, auf eine Wickelmaschine aufgesetzt, dort mit einer Armierung versehen, verspannt und erneut gespritzt wird. Dieses Verfahren ist allerdings nur zur Herstellung von speziellen Reifen ohne geschlossene Karkasse geeignet.

Es ist Aufgabe der vorliegenden Erfindung, eine Vorrichtung zu schaffen, die eine einfache, schnelle, energie- und kostensparende Fertigungsweise von qualitativ hochstehenden Fahrzeuggürtelreifen unter Verringerung oder Einsparung der zwischen den einzelnen Arbeitsschritten zurückzulegenden Transportwege ermöglicht.

Diese Aufgabe wird durch die im kennzeichnenden Teil des Anspruchs 1 genannten Merkmale gelöst.

Vorteilhafterweise wird mit dieser Vorrichtung der Transport des Laufstreifens von der konventionellen Spritzanlage zu der Gürtelwickelscheibe eingespart; die Einspritzvorrichtung mit den Form-Schalen wird zum Spritzen über die Gürtelwickelscheibe mit aufgespanntem Gürtel geschoben und geschlossen. Der Einspritzvorgang kann beginnen. Nach dem Spritzvorgang werden die Form-Schalen geöffnet und mit der Einspritzvorrichtung verschoben, wobei sie in eine Wartestellung oder zu einer weiteren Gürtelwickelscheibe gefahren werden können, wo sie bei einem in der Zwischenzeit gewickelten Gürtel weiterarbeiten. Es ist jedoch ebenso möglich, die Einspritzvorrichtung mit den Form-Schalen fest zu verankern und die Gürtelwickelscheibe in axialer Richtung beweglich anzuordnen. Mit dieser Anordnung kann der Gürtel ebenso arbeitssparend auf der Wickeltrommel gespritzt werden. Mit der erfindungsgemäßen Vorrichtung läßt sich somit die Produktivität der Gesamtanlage beträchtlich erhöhen. Des weiteren können erhebliche Maschineneinrichtungen, wie sie bei der bisherigen Laufstreifenherstellung benötigt werden, eingespart werden. Die erfindungsgemäße Vorrichtung ist so ausgelegt, daß sie den für das Aufspritzen des Laufgummirings erforderlichen Spritzdrücken standhalten kann.

Nach einer Weiterbildung der Erfindung sind Ringzylinder vorgesehen, deren Kolben in Richtung der Gürtelwickelscheibenachse ausfahrbar sind und damit auf Formkanten und verstellbare Konen einwirken, die zur Abdichtung der Formstirnseiten und zur Abdichtung der Formhöhlung gegen die Zufuhr zur Einspritzvorrichtung dienen. Dieses ermöglicht das Spritzen unter hohem Druck, wobei im übrigen die Ringzylinder durch das Ausfahren ihrer Kolben ein Schließen der Formkante zum Abdichten der Formhöhlung gegen die Zufuhr zur Einspritzvorrichtung nach beendetem Einspritzvorgang bewirken, womit gleichzeitig das eingespritzte Rohmaterial wirkungsvoll nachverdichtet wird. Zur Abdichtung der Formhöhlung gegen die Zufuhr zur Einspritzvorrichtung dient ferner ein zusätzlicher Ring aus elastischem, nahezu inkompressiblem Material, der im Durchmesser veränderbar ist.

Vorteilhafterweise sind die Form-Schalen in ihrer Innenseite, auf der der späteren Außenseite des Laufgummis zugewandten Seite profiliert. Damit kann unmittelbar beim Spritzvorgang schon das Reifenprofil der Lauffläche geschaffen werden. In einer weiteren Ausgestaltung des Erfindungsgegenstandes sind die Formschalen kontrolliert temperierbar, so daß jede für die Reifenherstellung optimale Temperatur eingestellt und kontrolliert werden kann. Infolge ihrer einfachen Bedienbarkeit bieten sich als Form-Schalen Halb-Schalen an. Die mit der Einspritzvorrichtung fest verbundenen Form-Schalen sind vorteilhafterweise radial und/oder axial verschiebbar.

Nach einer weiteren Ausgestaltung der Erfindung sind zur Zentrierung der Formschalen in bezug auf die Gürtelwickelscheibe Zentrierkanten und zum Öffnen und Schließen der Form-Schalen sowie zur Betätigung der Schließkeile an den Form-Schalen Hydraulikzylinder vorgesehen. Damit kann die Vorbereitung für den Spritzvorgang vollautomatisch ablaufen und die durch die Gürtelwickelscheibe, die Form-Schalen und den Gürtel gebildete Formhöhlung abgedichtet werden.

Als Gürtelwickelscheibe ist ebenso wie für den Ring zur Abdichtung der dem Einspritzkanal zugewandten Formkante vorteilhafterweise Polyurethan vorgesehen, das sich durch einen großen Elastizitätsmodul auszeichnet. Die Gürtelwickelscheibe besitzt nach dem Stand der Technik bekannte, V-förmig nach innen knickbare Scheiben, womit der Gürtelwickelscheibenmantel in Stellung mit verschiedenem Umfang gebracht werden kann. Somit ist die gewünschte Größe des herzustellenden Laufgummis frei vorgebbar. Zur Aufnahme der hohen Druckkräfte beim Einspritzvorgang dient der bereits erwähnte metallische Körper als Stütze für die Gürtelwickelscheibe. Vorteilhafterweise ist die Gürtelwickelscheibe in ihrem Inneren durch Preßluft belüftbar.

Zur Übernahme des Gürtels mit aufgespritztem Laufgummi ist ein Transferring axial verschiebbar zur Gürtelwickelscheibe angeordnet. Dieser besitzt vorteilhafterweise ebenfalls V-förmig nach innen knickbare Scheiben und kann somit den gespritzten Laufgummiring variabler Größe von der Gürtelwickelscheibe abnehmen und der Weiterverarbeitung zuführen. In einer weiteren Ausgestaltung der Erfindung sind ebenfalls nach dem Stand der Technik bekannte, über den Umfang verteilt angeordnete Stifte, Rippen oder Stützringe im Inneren der Gürtelwickelscheibe vorgesehen. Diese dienen zur Abstützung und Begrenzung bei der Aufweitung der Gürtelwickelscheibe nach dem Einspritzvorgang. Ein Ausführungsbeispiel der Erfindung ist in den Zeichnungen dargestellt. Es zeigt

Fig. 1 einen Querschnitt durch die erfindungsgemäße Vorrichtung während des Einspritzvorganges,

Fig. 2 einen Querschnitt durch die Gürtelwikkelscheibe mit darübergefahrenem Transferring im Zeitpunkt der Reifenübernahme nach dem Einspritzen und

Fig. 3 bis 7 eine schematische Darstellung der Arbeitsweise der erfindungsgemäßen Vorrichtung.

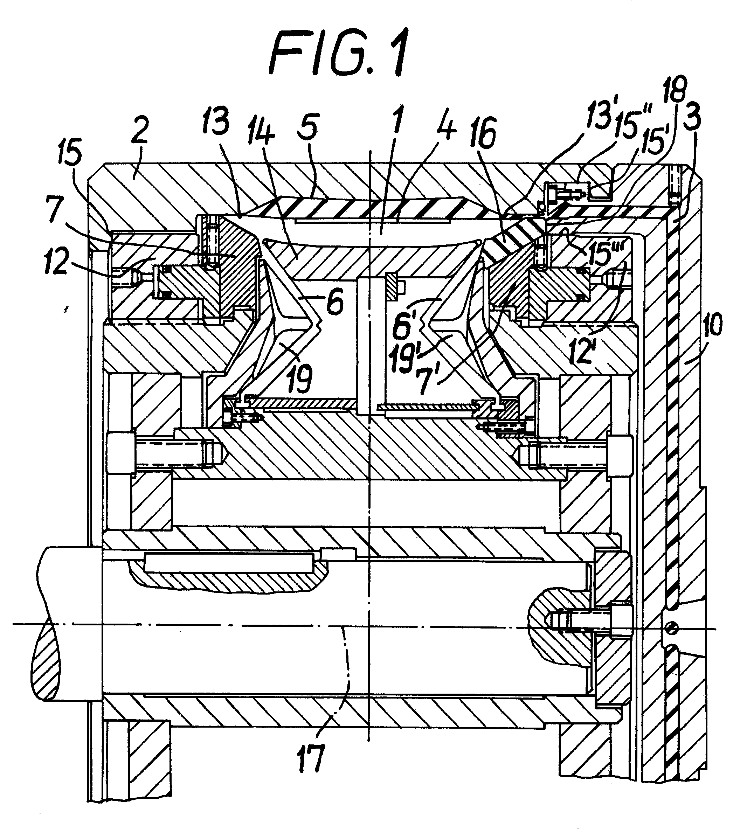

Die in Fig. 1 dargestellte Vorrichtung zum Spritzen von Laufgummiringen besteht im wesentlichen aus einer Gürtelwickelscheibe 1, einem dieser als Stütze dienenden Körper 14, der beispielsweise als metallischer Unterbau ausgebildet sein kann, den radial angeordneten, aufeinander zu bewegbaren Form-Halbschalen 2, 2' sowie einer nicht detailliert dargestellten, nach dem Stand der Technik bekannten Einspritzvorrichtung 10, die über eine Zuführung 3 mit der aus dem Gürtel 4, der Gürtelwickelscheibe 1 und den Form-Halbschalen 2, 2' gebildeten Formhöhlung 5 verbunden ist. Die Gürtelwickelscheibe 1 besitzt V-förmig nach innen knickbare Scheiben 6, 6' sowie Konen 7, 7' zur Abdichtung der Formhöhlung 5. Ferner ist ein Ring 16 aus Polyurethan zur Abdichtung der Stirnseite 18 vorgesehen. Die dargestellte Vorrichtung besitzt darüber hinaus Zentrierkanten 15, 15', 15'', 15''', die zur Zentrierung der Form-Halbschalen in bezug auf die Gürtelwickelscheibe 1 dienen. Die Gürtelwickelscheibe 1 ist aus Polyurethan und kann über die Kolben der Ringzylinder 12 und 12' an den Formkanten 13, 13' abgedichtet werden.

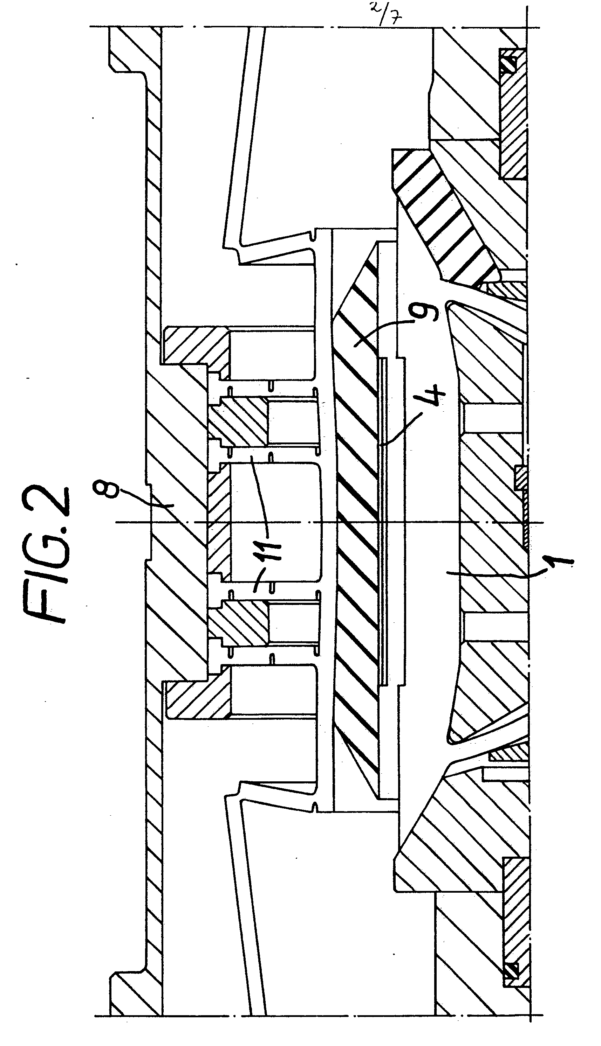

In Fig. 2 ist der Mantel der Gürtelwickelscheibe 1 mit über sie gefahrenen Transferring 8 dargestellt. Dieser besitzt ebenfalls V-förmig nach innen knickbare Scheiben 11, die in der dargestellten Anordnung ausgefahren sind und den mit gespritztem Laufgummi 9 versehenen Gürtel 4 von der Gürtelwickelscheibe 1 übernommen haben.

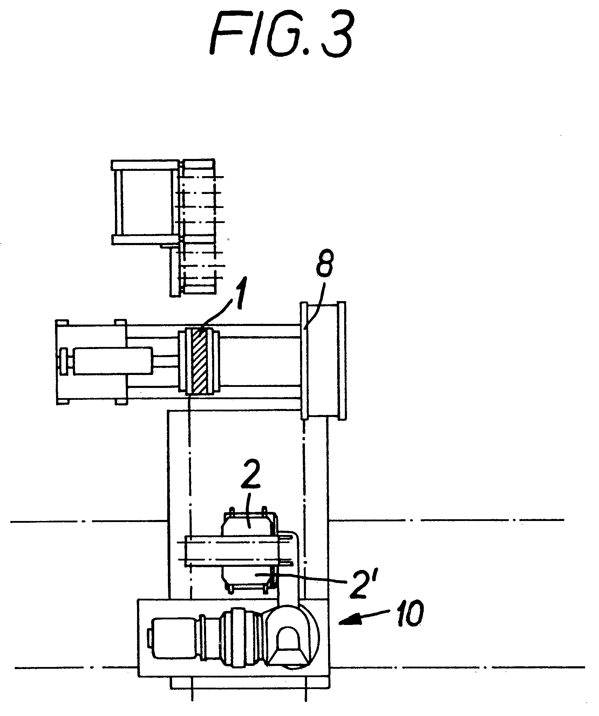

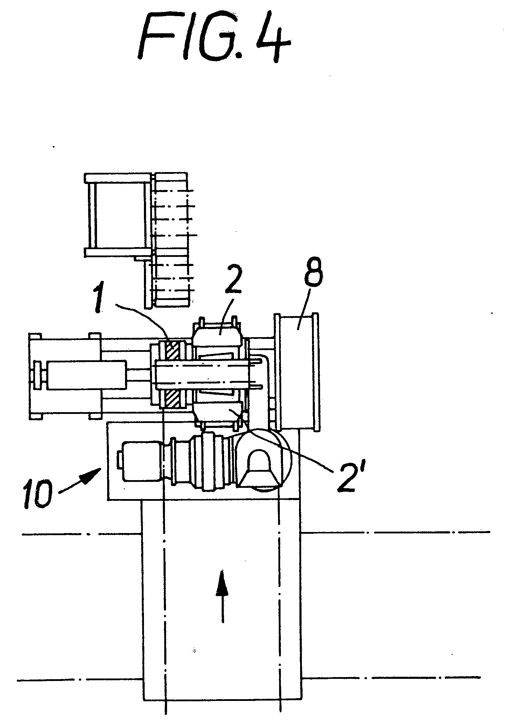

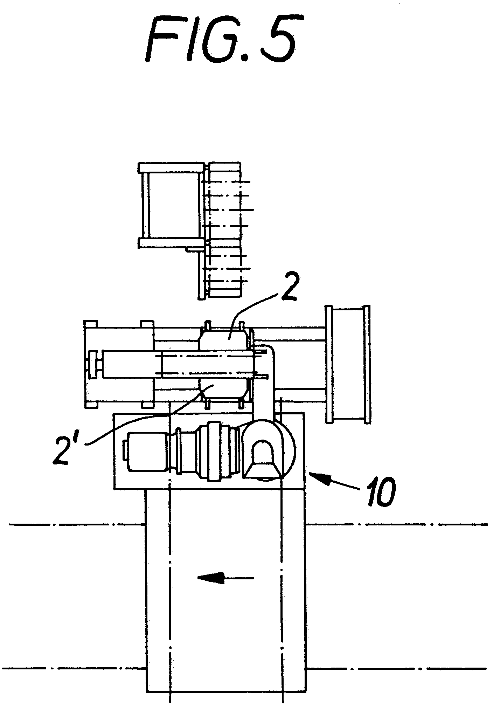

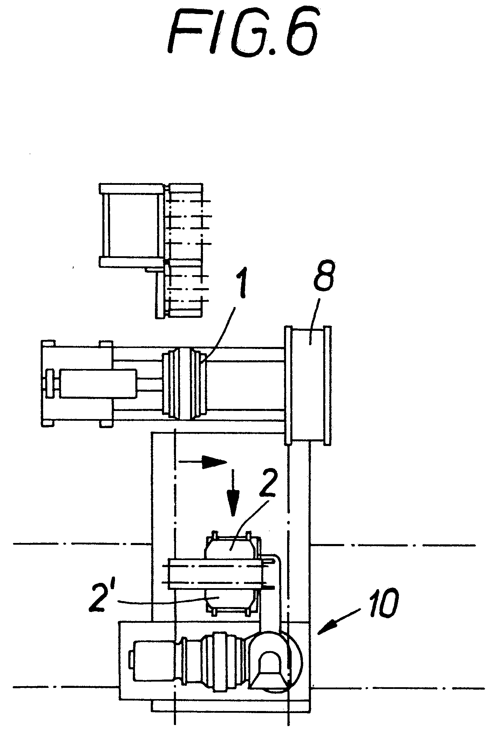

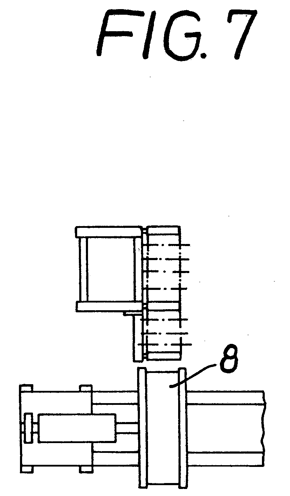

Die Arbeitsweise der zuvor beschriebenen erfindungsgemäßen Vorrichtung ist in Fig. 3 bis 8 schematisch dargestellt. Nach dem Wickeln des Gürtels auf der Gürtelwickelscheibe 1 wird die bis dahin in Ruhestellung befindliche oder an einer anderen Gürtelwickelscheibe eingesetzte Einspritzvorrichtung 10 mit Form-Halbschalen 2, 2' über die Achse der Gürtelwickelscheibe 1 gefahren (Fig. 3 und 4). Der Transferring 8 befindet sich zu diesem Zeitpunkt leer in Warteposition. Anschließend wird die Einspritzvorrichtung 10 mit Formhälften 2, 2' über die Gürtelwickelscheibe 1 gefahren. Die Form-Halbschalen 2, 2' werden über einen nicht dargestellten Hydraulikzylinder zusammengefahren und über Schließkeile miteinander verriegelt (Fig. 5). Der Einspritzvorgang kann beginnen. Wie in Fig. 1 dargestellt, wird der Kolben des Ringzylinders 12 ausgefahren, womit eine Anhebung der linken Kante der Gürtelwickelscheibe 1 an die Formkante 13 und damit eine Abdichtung der Formhöhlung 5 an der dortigen Stirnseite erfolgt. Anschließend wird über die Zufuhr 3 elastomeres Material, beispielsweise Gummi, in die Formhöhlung 5 gespritzt. Nach dem Einspritzvorgang wird der Kolben des Ringzylinders 12' ausgefahren, der die Formkante 13' anhebt und gleichzeitig über den Ring 16 aus Polyurethan eine Abdichtung der Stirnseite 18 herbeiführt. Die Zufuhr des elastomeren Materials ist damit unterbrochen. Mit dem Anpressen der Gürtelwickelscheibe an die Formkante 13' wird in Verbindung mit dem Konus 7' nicht nur eine hervorragende Abdichtung der Formhöhlung 5 ermöglicht, sondern auch das in die Formhöhlung 5 eingespritzte Material nachverdichtet bzw. evtl. eingeschlossene Luft herausgedrückt. Nun können die Schließkeile wieder geöffnet werden, die Form-Halbschalen 2, 2' auseinandergefahren und die Einspritzvorrichtung axial und radial in die in Fig. 6 dargestellte Position gefahren werden. Während dieser Zeit wird die Gürtelwickelscheibe 1 zum Vorrecken des Gürtels und des Laufgummis belüftet. Entsprechend der in Fig. 7 dargestellten Verfahrensweise fährt ein Transferring 8 über die Gürtelwickelscheibe 1 und wird belüftet, wobei die V-förmig geknickten Scheiben 11 den Transferring auf den Übernahmedurchmesser bringen und dieser den Gürtel mit aufgespritzter Lauffläche übernimmt. Abschließend wird der Gürtel mit Laufgummi dem nächsten Arbeitsgang, dem Bombier- und Andrückvorgang zugeführt.

## Patentansprüche

1. Vorrichtung zum Spritzen von endlosen Laufgummiringen auf Gürteleinlagen mit aus zwei oder mehreren Segmenten bestehenden, radial aufeinander zu bewegbaren Form-Schalen (2, 2'), einem inneren Kern, auf den der Gürtel zum Spritzen aufgespannt ist sowie einer Einspritzvorrichtung (10), die das fließfähige Rohmaterial unter Druck in die Formhöhlung (5) zwischen dem Kern, dem aufgespannten Gürtel (4) und den Form-Schalen (2, 2'), eingibt, dadurch gekennzeichnet, daß der Kern als elastische, nahezu inkompressible und im Durchmesser veränderbare Gürtelwickelscheibe (1) ausgelegt ist, die durch einen metallischen ringförmigen Körper (14) als Unterbau gestützt wird, und daß die Form-Schalen (2, 2') und die mit diesen verbindbare oder fest verbundene Einspritzvorrichtung (10) einerseits und die Gürtelwickelscheibe (1) andererseits relativ zueinander verschiebbar sind.

2. Vorrichtung nach Anspruch 1, gekennzeichnet durch Ringzylinder (12, 12'), deren Kolben in Richtung der Gürtelwickelscheibenachse (17) ausfahrbar sind, wobei die Kolben auf radial angeordnete Formkanten (13, 13') und verstellbare Konen (7, 7') einwirken, die die Formhöhlung (5) abdichten.

3. Vorrichtung nach Ansprüchen 1 und 2, gekennzeichnet durch einen elastischen, nahezu inkompressiblen, im Durchmesser veränderlichen Ring (16), der mittels des Kolbens des ersten Ringzylinders (12') zur Abdichtung der ersten Formkante (13') und der Stirnseite (18) im Durchmesser erweiterbar ist.

4. Vorrichtung nach Anspruch 1, dadurch gekennzeichnet, daß die Form-Schalen (2, 2') auf der der Außenseite des durch Spritzen herzustellenden Laufgummis zugewandten Seite profiliert sind.

5. Vorrichtung nach Ansprüchen 1 und 4, dadurch gekennzeichnet, daß die Form-Schalen (2, 2') kontrolliert temperierbar sind.

6. Vorrichtung nach Ansprüchen 1, 4 und 5, dadurch gekennzeichnet, daß die Form-Schalen (2, 2') als Formhalbschalen ausgebildet sind.

7. Vorrichtung nach Ansprüchen 1 und 4 bis 6, dadurch gekennzeichnet, daß die mit der Einspritzvorrichtung (10) fest verbundenen Form-Schalen (2, 2') in bezug auf die Gürtelwickelscheibe (1) axial und/oder radial verschiebbar sind.

8. Vorrichtung nach Ansprüchen 1 bis 7, dadurch gekennzeichnet, daß zur Zentrierung der Form-Schalen (2, 2') in bezug auf die Gürtelwickelscheibe (1) Zentrierkanten (15, 15', 15'', 15''') vorgesehen sind.

9. Vorrichtung nach Ansprüchen 1 und 4 bis 8, dadurch gekennzeichnet, daß zum Öffnen und Schließen der Form-Schalen (2, 2') Hydraulikzylinder vorhanden sind.

10. Vorrichtung nach Ansprüchen 1 und 4 bis 9, dadurch gekennzeichnet, daß zum Schließen der Form-Schalen (2, 2') Schließkeile vorgesehen sind, die mittels Hydraulikzylinder betätigbar sind.

11. Vorrichtung nach Ansprüchen 1 bis 3, dadurch gekennzeichnet, daß die Gürtelwickelscheibe (1) und der Ring (16) aus Polyurethan sind.

12. Vorrichtung nach Ansprüchen 1 bis 3 und 11, dadurch gekennzeichnet, daß die Gürtelwickelscheibe (1) V-förmig nach innen knickbare Scheiben (6, 6') besitzt.

13. Vorrichtung nach Ansprüchen 1, 11 und 12, dadurch gekennzeichnet, daß die Gürtelwickelscheibe (1) durch Zufuhr von Preßluft belüftbar ist.

14. Vorrichtung nach Ansprüchen 1 bis 13, dadurch gekennzeichnet, daß zur Übernahme des Gürtels (4) mit aufgespritztem Laufgummi (9) ein Transferring (8) axial zur Gürtelwickelscheibe (1) verschiebbar angeordnet ist.

15. Vorrichtung nach Anspruch 14, dadurch gekennzeichnet, daß der Transferring (8) mit V-förmig nach innen knickbaren Scheiben (11) ausgestattet ist und mittels Preßluft belüftet wird.

16. Vorrichtung nach Anspruch 1, gekennzeichnet durch im Inneren der Gürtelwickelscheibe (1) radial über den Umfang verteilte angeordnete Stifte, Rippen oder Stützringe (19, 19').

## Claims

1. Device for injecting endless tread rubber rings on to belt inlays with mould shells (2, 2') consisting of two or more segments and movable radially towards one another, an inner core on to which the belt is stretched for the injection, and an injection device (10) which introduces the flowable raw material under pressure into the mould cavity (5) between the core, the stretched-on belt and the mould shells (2, 2'), characterised in that the core is designed as an elastic, nearly incompressible belt-windung disc (1) of variable diameter which is supported by a metallic, annular body (14) as understructure, and in that the mould shells (2, 2') and the injection device (10) connectable or firmly connected therewith, on the one part, and the belt-winding disc (1) on the other part are displaceable in relation to one another.

2. Device according to Claim 1, characterised by annular cyliners (12. 12') the pistons of which are drivable outwards in the direction of the belt-winding disc axis (17), where the pistons act upon radially arranged mould edges (13, 13') and displaceable cones (7, 7') which seal the mould cavity (5).

3. Device according to Claims 1 and 2, characterised by an elastic, nearly incompressible ring (16) of variable diameter which is expandable in diameter by means of the piston of the first annular cylinder (12') to seal off the first mould edge (13') and the end face (18).

4. Device according to Claim 1, characterised in that the mould shells (2, 2') are profiled on the side facing the outside of the tread rubber to be produced by injection.

5. Device according to Claims 1 und 4, characterised in that the mould shells (2, 2') are temperable in monitored manner.

6. Device according to Claims 1, 4 and 5, characterised in that the mould shells (2, 2') are formed as mould half-shells.

7. Device according to Claims 1 and 4 to 6, characterised in that the mould shells (2, 2') firmly connected with the injection device (10) are axially and/or radially displaceable in relation to the belt-winding disc (1).

8. Device according to Claims 1 to 7, characterised in that centring edges (15, 15', 15'', 15''') are provided for the centring of the mould shells (2, 2') in relation to the belt-winding disc (1).

9. Device according to Claims 1 and 4 to 8, characterised in that hydraulic cylinders are provided for the opening and closing of the mould shells (2, 2').

10. Device according to Claims 1 and 4 to 9, characterised in that closing wedges which are actuatable by means of hydraulic cylinders are provided for the closing of the mould shells (2, 2').

11. Device according to Claim 1 to 3, characterised in that the belt-winding disc (1) and the ring (16) are of polyurethane.

12. Device according to Claims 1 to 3 and 11, characterised in that the belt-winding disc (1) possesses discs (6, 6') which can be bent inwards in V-form.

13. Device according to Claims 1, 11 and 12, characterised in that the belt-winding disc (1) can be pressurised by admission of compressed air.

14. Device according to Claims 1 to 13, characterised in that for taking over the belt (4) with injected-on tread rubber (9) a transfer ring (8) is arranged displaceably axially in relation to the belt-winding disc (1).

15. Device according to Claim 14, characterised in that the transfer ring (8) is equipped with discs (11) which can be bent inwards in V-form and ist pressurised by means of compressed air.

16. Device according to Claim 1, characterised by pins, ribs or support rings (19, 19') arranged in radial distribution over the circumference in the interior of the belt-winding disc (1).

## Revendications

1. Dispositif pour mouler par injection des anneaux de chape radiaux sans fin en caoutchouc sur des ceintures intérieures qui comprend des enveloppes de moule (2, 2') constituées par deux ou plusieurs segments pouvant se déplacer l'un par rapport à l'autre dans le sens radial, un noyau intérieur sur lequel la ceinture est tendue pour l'injection et un appareil d'injection (10) qui fait pénétrer par pression la matière première fluide dans la cavité (5) du moule situé entre le noyau, la ceinture tendue (4) et les enveloppes de moule (2, 2'), caractérisé en ce que le noyau est constitué par un disque d'enroulement (1) de la ceinture, qui est élastique et presque incompressible, dont le diamètre peut être modifié et qui est soutenu par un corps annulaire métallique sous-jacent (14), et en ce que, d'une part, les enveloppes de moule (2, 2'), et l'appareil d'injection (10), qui peut leur être relié ou leur est relié, et, d'autre part, le disque d'enroulement (1) de la ceinture peuvent se déplacer les uns par rapport à l'autre.

2. Dispositif selon la revendication 1, caractérisé en ce qu'il comprend des cylindres annulaires (12, 12') dont les pistons peuvent se déplacer dans la direction de l'axe (17) du disque d'enroulement de la ceinture de manière à agir sur les bords (13, 13') du moule orientés dans le sens radial et sur des cônes (7, 7') susceptibles de se déplacer, qui ferment d'une manière étanche la cavité (5) du moule.

3. Dispositif selon l'une des revendications 1 ou 2, caractérisé en ce qu'il comprend un anneau (16) qui est élastique et presque incompressible, dont le diamètre est variable et qui peut s'élargir, sous l'action du piston du premier cylindre annulaire (12'), pour une fermeture étanche au niveau du premier bord (13') du moule et de la surface frontable (18).

4. Dispositif selon la revendication 1, caractérisé en ce que les enveloppes de moule (2, 2') sont profilées sur leur côté tourné vers la surface extérieure de la chape qui doit être réalisée par le moulage par injection.

5. Dispositif selon les revendications 1 et 4, caractérisé en ce que la température des enveloppes de moule (2, 2') peut être contrôlée et réglée.

6. Dispositif selon l'une des revendications 1, 4 ou 5, caractérisé en ce que les enveloppes (2, 2') ont la forme de moitiés d'enveloppe.

7. Dispositif selon les revendications 1 et 4 à 6, caractérisé en ce que les enveloppes de moule (2, 2') reliées solidement à l'appareil d d'injection (10) peuvent se déplacer dans le sens axial et/ou radial par rapport au disque d'enroulement (1) de la ceinture.

8. Dispositif selon les revendications 1 à 7, caractérisé en ce que des bords de centrage (15, 15', 15'', 15''') permettent le centrage des enveloppes de moule (2, 2') par rapport au disque d'enroulement (1) de la ceinture.

9. Dispositif selon les revendications 1 et 4 à 8, caractérisé en ce que des cylindres hydrauliques ouvrent et ferment les enveloppes de moule (2, 2').

10. Dispositif selon les revendications 1 et 4 à 9, caractérisé en ce que la fermeture des enveloppes de moule (2, 2') s'obtient au moyen de cônes de fermeture commandés par des cylindres hydrauliques.

11. Dispositif selon les revendications 1 à 3, caractérisé en ce que le disque d'enroulement (1) de la ceinture et l'anneau (16) sont en polyuréthane.

12. Dispositif selon les revendications 1 à 3 et 11, caractérisé en ce que le disque d'enroulement (1) de la ceinture comporte des disques (6, 6') qui peuvent être pliés en forme de V vers l'intérieur.

13. Dispositif selon les revendications 1, 11 et 12, caractérisé en ce que le disque d'enroulement (1) de la ceinture peut être rempli d'air par arrivée d'air comprimé.

14. Dispositif selon les revendications 1 à 13, caractérisé en ce que la ceinture (4) portant la chape (9) moulée par injection est prise par un anneau de transfert (8) monté de manière à pouvoir se déplacer dans le sens axial par rapport au disque d'enroulement (1) de la ceinture.

15. Dispositif selon la revendication 14, caractérisé en ce que l'anneau de transfert (8) comporte des disques (11) qui peuvent être pliés en V vers l'intérieur et est rempli d'air, au moyen d'air comprimé.

16. Dispositif selon la revendication 1, caractérisé en ce qu'il comprend, à l'intérieur du disque d'enroulement (1) de la ceinture, des goupilles, des nervures ou des anneaux d'appui disposés dans le sens radial et répartis sur sa périphérie.

# FIG. 1

FIG.2

# FIG.3

# FIG.4

# FIG.5

# FIG.6

# FIG. 7